# EUROPEAN PATENT APPLICATION

(11) **EP 3 441 848 A1**
(43) Date of publication of application: **13.02.2019**
(21) Application number: 17185424.3
(22) Date of filing: 08.08.2017
(51) Int. Cl.: G06F 3/01

(54) **A SENSOR TRANSMISSION SYSTEM**

(71) Applicant: King's Metal Fiber Technologies Co., Ltd, Taichung City 8864-400 (TW)
(72) Inventor: Chen, Wei-Jun, 104 Taipei City (TW); Wu, Cheng-Han, 104 Taipei City (TW); Chen, Ren-Shou, 104 Taipei City (TW); Huang, Hong-Xu, 104 Taipei City (TW); Tian, Qi-Xin, 104 Taipei City (TW)
(74) Representative: Baumann, Rüdiger Walter

(57) **Abstract**

The present innovation patent relates to a sensor transmission system including a fabric for wearing, at least one sensor, and a central controller. Mainly, the sensing data is gathered by the sensing chip of the sensor, the sensing data which is gathered is analysed and calculated by the microprocessing chip, and thus the sensing data which is analysed and calculated is transmitted to the operation processing unit of the central controller to process aggregation and analysis of the data by the conductive wire. Therefore, the complex operation is able to be processed by multiprocessing of the sensor and the central controller to enhance operation efficiency, and the practicality will be enhanced thereby.

## Description

### BACKGROUND OF THE INNOVATION PATENT

### 1. Field of the Innovation patent

The present innovation patent relates to a sensor transmission system, and more particularly to clothing with sensing data transmission or smart clothing.

### 2. The Related Arts

Recently, with the development of the technology products, an electronic bracelet or an electronic handheld device has installed with a sensor to detect heartbeat or pulse of human body for capturing the health of the human body.

Besides, in addition to the above electronic bracelet or the electronic handheld device, a sensor has been set up on the clothing for physical detection of heartbeat. However, the conventional detection so simple that only the original data which is detected would be transmitted to other device, and the screen of the other device displays the original data which is detected. Therefore, the original data which is detected is not able to be displayed on the clothing immediately and also not able to be further used for analysis and exploitation.

### SUMMARY OF THE INNOVATION PATENT

The object of the present innovation patent is to provide a sensor transmission system including a fabric for wearing, at least one sensor, and a central controller. Mainly, the sensing data is gathered by the sensing chip of the sensor, the sensing data which is gathered is analysed and calculated by the microprocessing chip, and thus the sensing data which is analysed and calculated is transmitted to the operation processing unit of the central controller to process aggregation and analysis of the data by the conductive wire. Therefore, the complex operation is able to be processed by multiprocessing of the sensor and the central controller to enhance operation efficiency, and the practicality will be enhanced thereby.

Another object of the present innovation patent is to provide a sensor transmission system. By the central controller connected with at least one external device, the information aggregated and analysed from the data by the operation processing unit of the central controller can be transmitted to the storage unit of the external device to storage, and the external device is able to read the information stored in the storage unit to process big data analysis and information application, so that the message of evaluation or prediction can be provided in advance to remind the physical changes of the body or suggest clothing. Therefore, the present invention has a high commercial value. The practicality will be enhanced thereby.

Technical means adopted in the present invention to achieve the above object of the present invention is to provide a sensor transmission system including a fabric for wearing, at least one sensor, and at least one central controller. The sensor is combined with the fabric, and the central controller is combined to the fabric. Characterized in that : The sensor is provided with at least one sensing chip and at least microprocessing chip, and the sensing chip is connected with the microprocessing chip for gathering a sensing data by the sensing chip, and the microprocessing chip analyses and calculates the sensing data. The central controller is provided with at least one conductive wire and at least one operation processing unit. The conductive wire is connected to the operation processing. The conductive wire is provided on the fabric in order to connect with the sensor, so that the microprocessing chip of the sensor transmits information which is analysed and calculated from the sensing data to the operation processing unit of the central controller through the conductive wire, and the operation processing unit of the central controller processes aggregation and analysis of the data.

### BRIEF DESCRIPTION OF THE DRAWINGS

Figure 1 shows a system block diagram in accordance with an embodiment of the present invention;
Figure 2 shows a schematic appearance diagram in accordance with an embodiment of the present invention;
Figure 3 shows a schematic diagram illustrating the second type conductive wire in accordance with an embodiment of the present invention;
Figure 4 shows a schematic block diagram illustrating the connection to the external device in accordance with an embodiment of the present invention; and
Figure 5 shows a schematic appearance diagram illustrating the transmission of the external device in accordance with an embodiment of the present invention;

### DETAILED DESCRIPTION OF PREFERRED EMBODIMENT

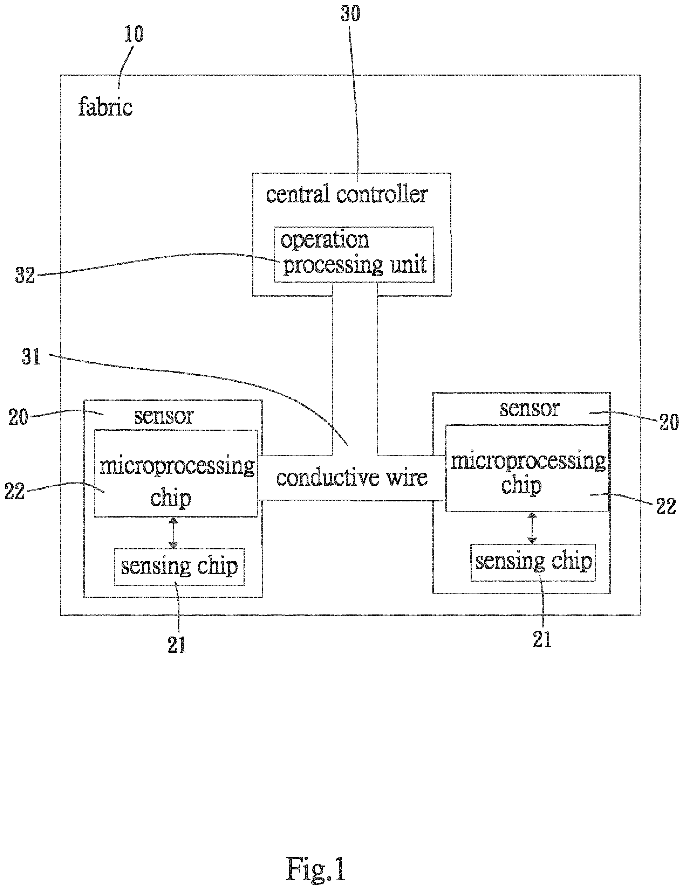

With reference to Figures 1 to 5, Figures 1 to 5 are schematics of an embodiment of the present invention. The sensor transmission system of the present invention is mainly applied to the clothing with a sensing data transmission or smart clothing, and thus the complex operation is processed by multiprocessing to enhance operation efficiency. The processed information is applied to big data analysis and information application, so that the message of evaluation or prediction can be provided in advance to remind the physical changes of the body or suggest clothing. Therefore, the present invention has a high commercial value.

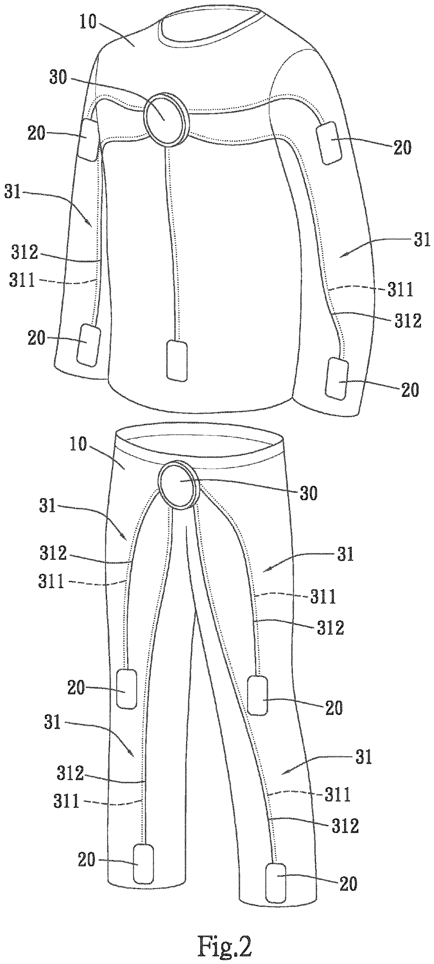

The sensor transmission system of the present invention includes a fabric 10 for wearing, at least one sensor 20, and at least one central controller 30 as shown in figure 1. The fabric 10 for wearing includes clothes, pants, gloves, socks, a hat, a hood, a underwear, a vest, or other woven fabrics that can be worn. The fabric 10 is not only used for people, but also for animal, such as a dog, a cat. The sensor 20 is combined to the fabric 10, and the central controller 30 is combined to the fabric 10 as shown in figure 2, wherein it is combined to outer layer or inner layer of the fabric 10 and the combination manner is selected from stitch, ultrasonic, heat fusion or adhesive, so as to easily use the sensor 20 or the central controller 30.

Further, the sensor 20 is provided with at least one sensing chip 21 and at least one microprocessing chip 22 or microcontroller (MCU). The sensing chip 21 is connected with the microprocessing chip 22 as shown in figure 1. The sensing chip 21 of the sensor 20 is further selected from a body temperature sensing chip, a heartbeat sensing chip, a blood sensing chip, a skin humidity sensing chip, an environment temperature sensing chip, an environment humidity sensing chip, an ultraviolet sensing chip, a fine suspended particles (PM 2.5) sensing chip, an electromagnetic wave sensing chip, or an accelerometer (G-Sensor) sensing chip, so that the sensing data can be gathered by the sensing chip 21. The sensing data is further an internal body signal or an external environment signal. The internal body signal is a physiological signal, and the physiological signal is selected from body temperature, heartbeat, pulse or skin humidity, and the external signal is selected from environment temperature, environment humidity, ultraviolet index, fine suspended particles concentration (PM 2.5), or electromagnetic wave intensity. The microprocessing chip 22 or microcontroller (MCU) analyses and calculates the sensing data. For example, the when the sensing data detected from the physiological signal of body temperature is 38 centigrade degrees, the sensing data will be analysed in accordance with the default value, 36 centigrade degrees, so as to confirm whether the sensing data is over the default value.

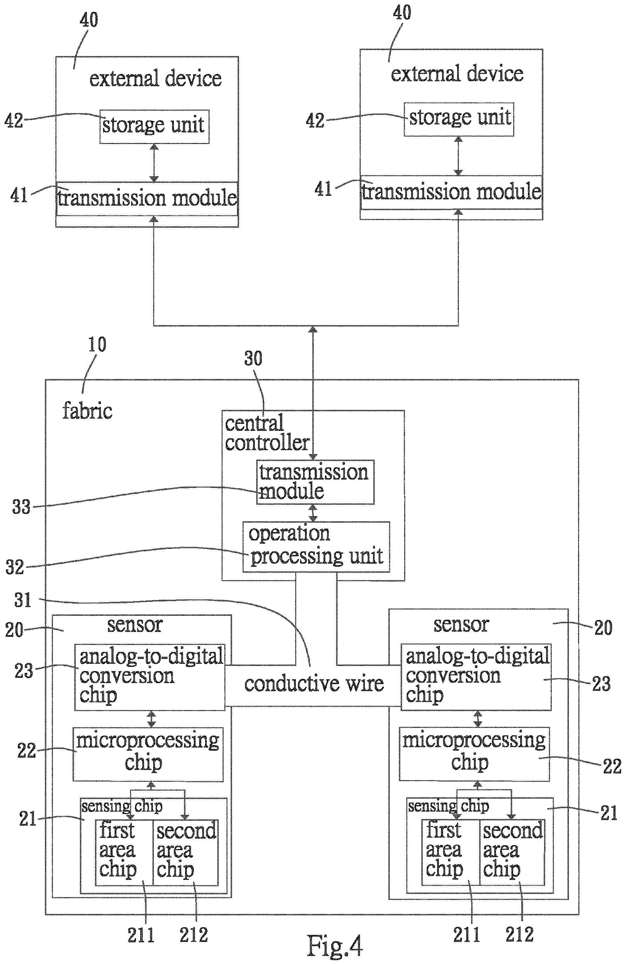

The sensing chip 21 of the sensor 20 of the other embodiment according to the present invention is further provided with a first area chip 211 and a second area chip 212 as show in figure 4. The first area chip 211 and a second area chip 212 can be two different chips that combines to each other or be two parts of the same chip. The first area chip 211 and the second area chip 212 are individually selected from a body temperature sensing chip, a heartbeat sensing chip, a blood pressure sensing chip, a skin humidity sensing chip, an environment temperature sensing chip, an environment humidity sensing chip, an ultraviolet sensing chip, a fine suspended particles (PM 2.5) sensing chip, an electromagnetic wave sensing chip, or an accelerometer (G-Sensor) sensing chip to gather different sensing data, and then the internal body signal and the external environment signal are detected at the same time to enable the microprocessing chip 22 or microcontroller (MCU) to analyse and calculate the sensing data.

Moreover, the central controller 30 is provided with at least one conductive wire 31 and at least one operation processing unit 32 such as central processing unit (CPU). The conductive wire 31 is connected to the operation processing unit 32 and the conductive wire 31 is provided on the fabric 10 in order to connect with the sensor 20 as shown in figure 2, wherein the conductive wire 31 is combined to outer layer or inner layer of the fabric 10 by a combination manner that is selected from stitch, ultrasonic, heat fusion or adhesive. The conductive wire 31 includes at least one power line 311 and at least one signal line 312. The conductive wire 31 is composed of a metal fiber or a metal wire. When the central controller 30 is provided with at least one power unit, not shown in figure, a power is able to be transported to the sensor 20 for use by the power line 311. The information of the central controller 30 and the sensor 20 is transmitted by the signal line 312, so that the microprocessing chip 22 of the sensor 20 transmits information which is analysed and calculated from the sensing data to the operation processing unit 32 of the central controller 30 through the conductive wire 31 as shown in figure 1, and the operation processing unit 32 of the central controller 30 processes aggregation and analysis of the data. The sensor 20 is further provided with an analog-to-digital conversion chip 23 to process analog-to-digital conversion of the sensing data which is analysed and calculated by the microprocessing chip 22 as shown in figure 4 so as to facilitate the transmission of signal.

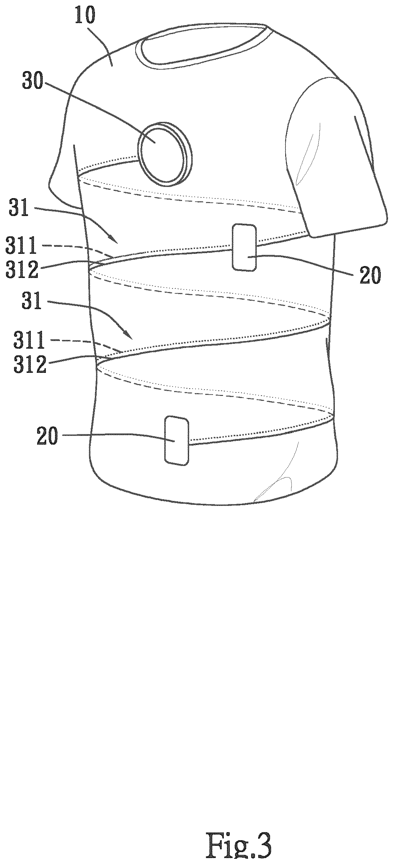

Further, the conductive wire 31 has two types. The first type is provided with a plurality of the conductive wires 31. The plurality of conductive wires 31 are distributed in the fabric 10 for wearing, and the plurality of conductive wires 31 are connected to a sensor 20 individually so as to transmit the information of the sensor 20 to the operation processing unit 32 of the central controller 30 as shown in figure 2. The second type is provided with the conductive wire 31 which is formed as a strip shape. The conductive wire 31 formed as a strip is able to be provided within the fabric 10 for wearing, and the conductive wire 31 formed a strip is capable of connecting to the plurality of sensors 20 as shown in figure 3, and thus the information of the sensors 20 is transmitted to the operation processing unit 32 of the central controller 30 by the same conductive wire 31. Both the first type or the second type process aggregation and analysis of the data by the operation processing unit 32 of the central controller 30. For example, the sensing data of the body temperature, the heartbeat, the environment temperature, the environment humidity transmitted by the conductive wire 31 is arranged in accordance with the time, so as to determine whether there is any change by analysing the transmitted sensing data and the last sensing data, and the complex operation is able to be processed by multiprocessing of the sensor 20 and the central controller 30 to enhance operation efficiency thereby.

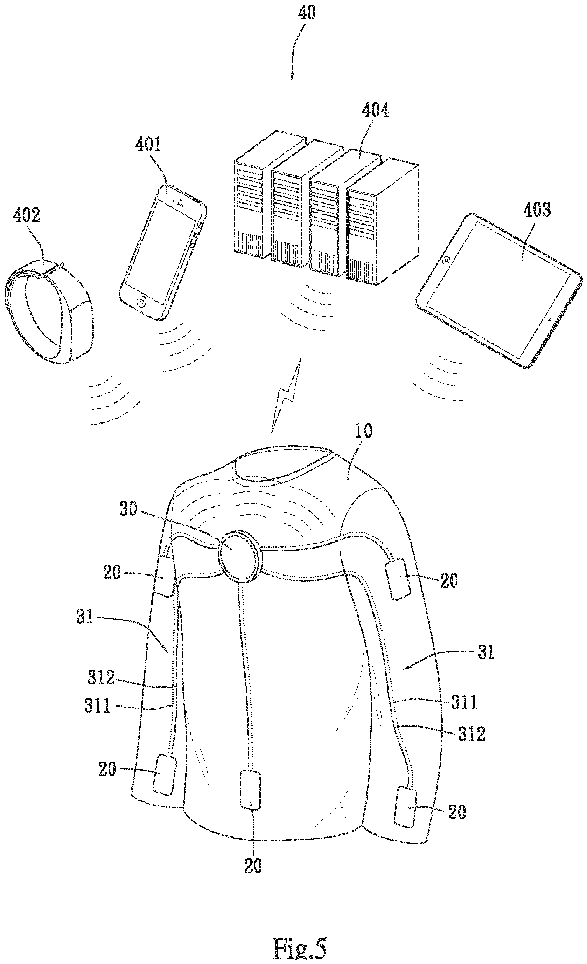

The central controller 30 is provided with at least one external device 40. The external device 40 is selected from a smart handheld device 401, a smart bracelet 402, a person computer, a tablet computer 403, a server 404 or a cloud server as shown in figure 5. The central controller 30 is further provided with a transmission module 33. The external device 10 is provided with a transmission module 41 and a storage unit 42 so that the transmission module 33 of the central controller 30 is connected with the transmission module 41 of the external device 40 as shown in figure 4. The transmission module 33 of the central controller 30 is connected with the transmission module 41 of the external device 40 by wired (such as cable line) or wireless manner, and the wireless manner is selected from Bluetooth system, infrared system, wireless local area network (WLAN) system or Wi-Fi system. Hence, the information aggregated and analysed from the data by the operation processing unit 32 of the central controller 30 can be transmitted to the storage unit 42 of the external device 40 to storage, and the external device 40 is able to read the information stored in the storage unit 42 to process big data analysis and information application, so that the message of evaluation or prediction can be provided in advance to remind the physical changes of the body or suggest clothing. Therefore, the present invention has a high commercial value.

## Claims

1. A sensor transmission system, including a fabric for wearing, at least one sensor, and at least one central controller. The sensor is combined with the fabric, and the central controller is combined to the fabric. **Characterized in that** : The sensor is provided with at least one sensing chip and at least microprocessing chip, and the sensing chip is connected with the microprocessing chip for gathering a sensing data by the sensing chip, and the microprocessing chip analyses and calculates the sensing data. The central controller is provided with at least one conductive wire and at least one operation processing unit. The conductive wire is connected to the operation processing. The conductive wire is provided on the fabric in order to connect with the sensor, so that the microprocessing chip of the sensor transmits information which is analysed and calculated from the sensing data to the operation processing unit of the central controller through the conductive wire, and the operation processing unit of the central controller processes aggregation and analysis of the data.

2. The sensor transmission system as claimed in Claim **1,** wherein the central controller is further connected with at least one external device, the central controller is provided with a transmission module, the external device is provided with a transmission module and a storage unit, so that the transmission module of the central controller is connected with the transmission module of the external device so as to transmit the information aggregated and analysed from the data by the operation processing unit of the central controller to the storage unit of the external device for storage, and the external device is able to read the information stored in the storage unit to process big data analysis and information application.

3. The sensor transmission system as claimed in Claim **2,** wherein the external device is further selected from a smart handheld device, a smart bracelet, a person computer, a tablet computer, a server or a cloud server, the transmission module of the central controller is further connected with the transmission module of the external device by wired or wireless manner, and the wireless manner is selected from Bluetooth system, infrared system, wireless local area network system or Wi-Fi system.

4. The sensor transmission system as claimed in Claim **1,** wherein the conductive wire of the central controller is further formed as a strip shape, the conductive wire formed as a strip is able to be provided within the fabric for wearing, and the conductive wire formed a strip is capable of connecting to a plurality of sensors.

5. The sensor transmission system as claimed in Claim **1,** wherein the central controller is further provided with a plurality of conductive wires, the plurality of conductive wires are distributed in the fabric for wearing, and the plurality of conductive wires are connected to a sensor individually.

6. The sensor transmission system as claimed in Claim **1,** wherein the conductive wire of the central controller further includes a power line and a signal line, a power is transported to the sensor for use by the power line, and the information of the central controller and the sensor is transmitted by the signal line.

7. The sensor transmission system as claimed in Claim **1,** wherein the sensor is further provided with an analog-to-digital conversion chip to process analog-to-digital conversion of the sensing data which is analysed and calculated by the microprocessing chip.

8. The sensor transmission system as claimed in Claim **1,** wherein the sensing chip of the sensor is further selected from a body temperature sensing chip, a heartbeat sensing chip, a blood sensing chip, a skin humidity sensing chip, an environment temperature sensing chip, an environment humidity sensing chip, an ultraviolet sensing chip, a fine suspended particles sensing chip, an electromagnetic wave sensing chip, or an accelerometer sensing chip.

9. The sensor transmission system as claimed in Claim **1,** wherein the sensing chip of the sensor is further provided with a first area chip and a second area chip, the first area chip and the second area chip are individually selected from a body temperature sensing chip, a heartbeat sensing chip, a blood pressure sensing chip, a skin humidity sensing chip, an environment temperature sensing chip, an environment humidity sensing chip, an ultraviolet sensing chip, a fine suspended particles sensing chip, an electromagnetic wave sensing chip, or an accelerometer sensing chip to gather different sensing data.

10. The sensor transmission system as claimed in Claim **1,** wherein the sensing data is further an internal body signal or an external environment signal, the internal body signal is a physiological signal, the physiological signal is selected from body temperature, heartbeat, pulse or skin humidity, and the external signal is selected from environment temperature, environment humidity, ultraviolet index, fine suspended particles concentration, or electromagnetic wave intensity.
